# EUROPÄISCHE PATENTSCHRIFT

(11) **EP 0 533 057 B1**
(45) Veröffentlichungstag und Bekanntmachung des Hinweises auf die Patenterteilung: **29.12.1997**
(21) Anmeldenummer: 92115499.3
(22) Anmeldetag: 10.09.1992
(51) Int. Cl.: A01N 25/04, A01N 43/76

(54) **Selektive herbizide Mittel in Form konzentrierter Mikroemulsionen**
Selective herbicidal agent in the form of concentrated microemulsions
Agent herbicide sélectif sous forme de micro-émulsions concentrées

(30) Priorität: 14.09.1991 DE 4130707; 29.10.1991 DE 4135587
(43) Veröffentlichungstag der Anmeldung: 24.03.1993
(73) Patentinhaber: Hoechst Schering AgrEvo GmbH, 13347 Berlin (DE)
(72) Erfinder: Heinrich, Rudolf, Dr., W-6233 Kelkheim (Ts.) (DE); Haase, Detlev, Dr., W-6231 Sulzbach (Ts.) (DE); Maier, Thomas Dr., W-6000 Frankfurt am Main 71 (DE)

(56) Entgegenhaltungen:
- EP-A- 0 118 759
- EP-A- 0 257 286
- EP-A- 0 330 904
- WO-A-88/07326

## Beschreibung

Die Erfindung betrifft neue flüssige selektive herbizide Mittel, welche die Wirkstoffe in Form chemisch und anwendungstechnisch stabiler niedrigviskoser Mikroemulsionen enthalten.

Aus der EP-A-118759 und dem kanadischen Patent 1227353 ist bekannt, daß Lösungen von Phenoxy-phenoxy-carbonsäuren und deren Derivaten in aromatischen Lösungsmitteln mit Hilfe von endständig phosphorylierten Ethylenoxid-Propylenoxid-Ethylenoxid-Blockcopolymeren in wäßriger Phase zu milchig-weißen konzentrierten Emulsionen formuliert werden können. Dabei kann es allerdings vorkommen, daß bei Verwendung größerer Netzmittelmengen und höherer Wirkstoffmengen, schwer fließende, hochviskose Makroemulsionen entstehen, die bei der Applikation zu Schwierigkeiten führen können.

Es ist ferner bekannt, herbizide Wirkstoffe aus der Gruppe der Phenoxyphenoxy-Herbizide und der Benzoxazolyloxy-phenoxy-carbonsäureester mit anderen selektiv herbizid wirkenden Verbindungen oder mit Kulturpflanzen schützenden Mitteln (Safenern) zum Zwecke einer Optimierung des Wirkungsspektrums zu chemisch und anwendungstechnisch stabilen Fertigformulierungen zu kombinieren.

In der EP-A-174562 und dem US-Patent 4639266 wird beschrieben, herbizid wirksame Benzoxazolyloxy-phenoxy-carbonsäure-Derivate, wie z. B. 2-[4-(6-Chlor-1,3-benzoxazol-2-yloxy)-phenoxy]-propionsäure-ethylester (Fenoxaprop-ethyl) mit Safenern aus der Gruppe der gegebenenfalls substituierten 1-Aryl-3-alkoxycarbonyl-5-alkyl-1,2,4-triazol-Verbindungen in der Weise zu kombinieren, daß der Spritzbrühe kurz vor der Applikation des Fenoxaprop-ethyl entsprechende Anteile einer Formulierung des genannten 1,2,4-Triazols sowie weiterer herbizider Wirkstoffe, z.B. aus der Gruppe der Wuchsstoffe und anderer Verbindungen zugesetzt werden, um auf diese Weise die vorteilhaften biologischen Eigenschaften der Kombination dieser Wirkstoffe zu nutzen. Dieses Verfahren ist jedoch relativ umständlich und zeitraubend. In der Praxis kann es damit zu Fehldosierungen führen.

Es bestand daher die Aufgabe, diese Schwierigkeiten zu umgehen und biologisch wirksame, homogene und chemisch sowie anwendungstechnisch stabile Zubereitungen dieser Wirkstoffe in Form umweltfreundlicher, niedrigviskoser Mikroemulsionen herzustellen, die den in der Praxis gestellten Anforderungen entsprechen.

Dabei war insbesondere zu beachten, daß sich die unterschiedlichen Wirkstoffklassen in Gegenwart üblicher Formulierungshilfsmittel und Stabilisatoren bei erhöhten Lagertemperaturen gegenseitig negativ beeinflussen können und sich dann, vor allem bei längeren Lagerzeiten, chemisch merklich verändern und zu biologisch weniger wirksamen oder gar unwirksamen Komponenten führen. Diese Nachteile werden mit der vorliegenden Erfindung überwunden. Überraschenderweise wurde nun gefunden, daß bei Verwendung von ausgewählten Emulgatoren mit den obengenannten Wirkstoffen transparente Mikroemulsionen hergestellt werden können, die auch nach längerer Lagerung sowohl in der Kälte als auch bei höheren Temperaturen physikalisch und chemisch stabil bleiben und keine Inhomogenitäten zeigen.

Aus EP-A-330904 sind bereits Mikroemulsionen für Wirkstoffkombinationen von Bentazon und Phenoxy- bzw. Heteroaryloxy-phenoxycarbonsäure-Herbiziden bekannt, die ein oder mehrere Emulgatoren aus der Gruppe dodecylbenzolsulfonsaures Calcium, ethoxylierte Derivate von Rizinusöl, Nonylphenol, Fettalkoholen oder Fettsäuren enthalten. Aus WO-A-8807326 sind Mikroemulsionen von Pyrethroiden bekannt, die EO-PO-Blockcopolymere und Dodecylbenzolsulfonsäure als Tenside enthalten.

Die vorliegende Erfindung betrifft flüssige, selektive herbizide Mittel auf Basis umweltfreundlicher konzentrierter Mikroemulsionen, welche neben
a) mindestens einen herbiziden Wirkstoff aus der Klasse der Phenoxyphenoxy- oder Heteroaryloxy-phenoxycarbonsäure-Derivate,
b) gegebenenfalls mindestens eine Verbindung aus der Gruppe der gegebenenfalls substituierten 1-Aryl-3-alkoxycarbonyl-5-alkyl-1,2,4-triazole, der substituierten 1-Aryl-5-alkoxycarbonyl-5-alkyl-pyrazolin-3-carbonsäureester und der 5-substituierten 8-Chinolinoxyessigsäureester,
c) gegebenenfalls mindestens eine Verbindung aus der Klasse der substituierten Aryloxyalkansäuren und der halogenierten Hydroxybenzonitrile,
d) mindestens einen Dispergator aus der Klasse der Fettalkohol-polyoxypropylen-polyoxyethylen-ether und der Polyoxyethylen-polyoxypropylen-Blockcopolymeren,
e) gegebenenfalls eine oder mehrere Carbonsäure- und/oder Phosphorsäureester von aliphatischen Mono-, Di- oder Polyalkoholen als stabilisierendes Agens,
f) mindestens einen Emulgator oder ein Netzmittel aus der Gruppe dodecylbenzolsulfonsaures Calcium, Fettsäurepolyglykolester, wie ethoxyliertes Rizinusöl, der ethoxylierten Nonylphenole und der Alkanolpolyglykolether,
g) ein oder mehrere organische Lösungsmittel, vorzugsweise ausgewählt aus der Gruppe bestehend aus Aromaten, Ketonen und Pyrrolidonen,
h) gegebenenfalls mindestens ein Cosolvent und/oder Frostschutzmittel ausgewählt aus der Gruppe bestehend aus Polyolen, wie Ethylenglykol, Propylenglykol, Glycerin, Polyglykole und Zuckeralkohole, Zuckern und Harnstoff,
i) gegegenenfalls mindestens ein Dispergiermittel aus der Reihe der Kresol-Formaldehyd-Kondensationsprodukte mit einer aromatischen Sulfonsäure, wie ®Dispergiermittel SS (Hoechst AG) und
j) Wasser enthalten.

Als herbizide Phenoxy- oder Heteraryloxy-phenoxy-carbonsaure-Derivate werden vorzugsweise die substituierten Phenoxy-phenoxy-, Chinoxalyloxy-phenoxy-, Pyridyloxy-phenoxy-, Benzoxazolyloxy-phenoxy- oder Benzthiazolyloxy-phenoxycarbonsäureester in Form der reinen optischen Isomeren oder als Isomerengemische (z. B. Racemate) eingesetzt. Diese Verbindungen sind beispielsweise aus DE-A-2136828, US-Patent 4238626, DE-A-2223894, US-Patent 3954442, GB-Patent 2042539, GB-Patent 1599121, DE-A-2640730 und US-Patent 4130413 bekannt. In Frage kommen insbesondere die (C₁-C₄)-Alkyl-, (C₂-C₄)-Alkenyl- oder (C₃-C₄)-Alkinyl-ester oder deren Salze.

Von diesen Herbiziden (Komponente (a)) sind insbesondere zu nennen die Phenoxy-phenoxy-carbonsäure-Derivate wie
2-(4-(2,4-Dichlorphenoxy)-phenoxy)-propionsäure-methylester (Diclofop-methyl),
2-(4-(4-Brom-2-chlorphenoxy)-phenoxy)-propionsäure-methylester (DE-A-2601548),
2-(4-(4-Brom-2-fluorphenoxy)-phenoxy)-phenoxy)-propionsäure-methylester (US-Patent 4808750),
2-(4-(2-Chlor-4-trifluormethylphenoxy)-phenoxy)-propionsäure-methylester (DE-A-2433067),
2-(4-(2-Fluor-4-trifluormethylphenoxy)-phenoxy)-propionsäure-methylester (US-Patent 4808750),
4-(4-(4-Trifluormethylphenoxy)-phenoxy)-pent-2-en-säure-ethylester,
2-(4-(4-Trifluormethylphenoxy)-phenoxy)-propionsäure-methylester, (DE-A-2433067),
   "einkernige" Heteroaryloxy-phenoxy-alkancarbonsäure-Derivate, wie
2-(4-(3,5-Dichlorpyridyl-2-oxy)-phenoxy)-propionsäure-ethylester, (EP-A-2925),
2-(4-(3,5-Dichlorpyridyl-2-oxy)-phenoxy)-propionsäure-propargylester (EP-A-3114),
2-(4-(3-Chlor-5-trifluormethyl-2-pyridyloxy)-phenoxy-propionsäure-methylester,
[Haloxyfop-methyl) und der entsprechende 2-Ethoxyethylester (Haloxyfop-2-ethoxyethyl); EP-A-3890],
2-(4-(3-Chlor-5-trifluormethyl-2-pyridyloxy)-phenoxy)-propionsäure-ethylester (EP-A-3890),
2-(4-(3-Chlor-5-fluor-2-pyridyloxy)-phenoxy)-propionsäure-propargylester (EP-A-191736),
2-(4-(5-Trifluormethyl-2-pyridyloxy)-phenoxy)-propionsäure-butylester (Fluazifopbutyl),
2-[2-[4-(3,5-dichlor-2-pyridyloxy)-phenoxy]-propionyl-1,2-oxazolidin (Isoxapyrifop) und
   "zweikernige" Heteroaryloxyphenoxy-alkancarbonsäure-Derivate, wie
2-(4-(6-Chlor-2-chinoxalyloxy)-phenoxy)-propionsäure-methylester und -ethylester (Quizalofop-methyl und -ethyl),
2-(4-(6-Fluor-2-chinoxalyloxy)-phenoxy)-propionsäure-methylester und -ethylester (J.Pest.Sci., Vol. 10,61 (1985)),
2-(4-(6-Chlor-2-chinolyloxy)-phenoxy)-propionsäure-methylester und -2-isopropylidenaminooxy-ethylester (Propaquizafop u. Ester),
2-(4-(6-Chlorbenzoxazol-2-yloxy)-phenoxy)-propionsäure-ethylester (Fenoxapropethyl) und
2-(4-(6-Chlorbenzthiazol-2-yloxy)-phenoxypropionsäure-ethylester (Fenthiapropethyl; DE-A-2640730).

Geeignete Verbindungen für die gegebenenfalls zu verwendende Komponente (b) der erfindungsgemäßen Mittel sind die in der EP-A-174562 genannten Verbindungen, vorzugsweise die 1-(2,4-Dichlorphenyl)-3-(C₁-C₄)-alkoxy-carbonyl-5-halogenalkyl-1,2,4-triazol-Verbindungen, insbesondere die 1-(2,4-Dichlorphenyl)-3-ethoxycarbonyl-5-halogenalkyl-1,2,4-triazole, wobei der Halogenalkylrest vorzugsweise CCl₃, CHCl₂, CHF₂CF₂ bedeutet, insbesondere 1-(2,4-Dichlorphenyl)-3-ethoxycarbonyl-5-trichlormethyl-1,2,4-triazol. Außerdem sind geeignet 1-(Halogenaryl)-5-(ethoxycarbonyl)-5-alkyl-pyrazolin-3-carbonsäureester, wie 1-(2,4-Dichlorphenyl)-5-ethoxycarbonyl-5-methyl-pyrazolin-3-carbonsäure-ethylester, sowie Chinolinoxyalkancarbonsäure-Derivate wie die (5-Chlor-8-chinolinoxy)-essigsäureester.

Als gegebenenfalls zu verwendende Komponente (c) eignen sich Salze oder Fettsäureester von substituierten Aryloxyalkansäuren, vorzugsweise substituierte Phenoxyessigsäure-Derivate, wie z. B. 2,4 D-butyl oder 2,4 D-octyl-Verbindungen sowie MCPA-butyl oder MCPA-octyl, ferner weitere substituierte Phenoxy-alkansäure-Derivate wie Mecoprop-isooctyl oder Mecoprop-P-isobutyl, MCPB-ethyl oder MCPB-isooctyl sowie Bromoxynil- oder Ioxyniloctanoat. Die hier genannten Verbindungen sind beschrieben in "The Pesticide Manual", 9. Auflage.

Geeignete Dispergatoren (d) sind z.B. Alkylether von Polyoxypropylen-polyoxyethylen-Blockcopolymerisaten, insbesondere einfache Fettalkoholpolyoxypropylen-polyoxyethylen-ether, wie z. B. die der (C₃-C₇)-Alkohole, insbesondere des n-Butanol oder des Isobutanol, wie HOE S3510, HOE S1816 (beide: Hoechst AG) und ®Rewopal (Rewo Chemie).

Als Komponente (e) mit stabilisierender Wirkung sind niedrigmolekulare Ester aus Carbonsäuren mit Alkoholen, Diolen oder Polyolen von besonderem Interesse, beispielsweise Ester aus aliphatischen (C₂-C₅)-Carbonsäuren und linearen oder verzweigten aliphatischen (C₂-C₁₂)-Alkoholen, -Diolen oder -Polyolen. Bevorzugt sind dabei Ester von Carbonsäuren, wie Essigsäure, Propionsäure, Buttersäure oder Pentansäure, insbesondere Essigsäure, mit Alkoholen, wie Methanol, Ethanol, Propanol, Isopropanol, n-, t- und 2-Butanol, Isobutanol, n- oder 2-Pentanol, Isopentanol, n- oder 2-Hexanol, Isohexanol, Heptanol, Octanol, Nonanol, Decanol, Undecanol und Dodecanol, oder Diolen, wie Glykol, Propandiol, Butandiol und Hexandiol, oder Polyolen, wie Glycerin, Pentaerythrit und Hexit.

Bevorzugt sind insbesondere Ester von Essigsäure mit (C₂-C₆)-Alkoholen oder mit Diolen wie 1,4-Butandiol oder mit Triolen wie Glycerin.

Als Komponente (f) eignen sich handelsübliche Emulgatoren, vorzugsweise ein oder mehrere aus der Gruppe der Alkylbenzolsulfonate, wie dodecylbenzolsulfonsaures Calcium und Fettsäurepolyglykolester, wie ethoxyliertes Rizinusöl. Gegebenenfalls enthaltene Netzmittel sind vorzugsweise aus der Gruppe der Alkylphenolpolyglykolether und Alkanolpolyglykolether.

Das erfindungsgemäß zu verwendende ethoxylierte Rizinusöl enthält insbesondere 20 bis 60 EO-Einheiten (EO = Ethylenoxid). Beispielsweise können die Produkte ®Emulsogen EL 400 oder ®Emulsogen EL 360 (Hoechst AG) eingesetzt werden. Die ethoxylierten Nonylphenole enthalten 2 - 20 EO. Zu diesen zählt beispielsweise ®Arkopal N 100 (Hoechst AG). Als Alkanolpolyglykolether sind bevorzugt ethoxylierte (C₈-C₂₀)-Alkanole mit einem EO-Gehalt von 3 bis 20 EO, z. B. ®Genapol X 060 (Hoechst AG) zu nennen. Die Fettsäurepolyglykolester enthalten insbesondere 12 - 18 C-Atome im Fettsäureteil. Von den genannten Emulgatoren eignen sich erfindungsgemäß am besten ethoxyliertes Rizinusöl und die Alkanolpolyglykolether.

Darüberhinaus können den erfindungsgemäßen Formulierungen wertere übliche anionische oder nichtionische Emulgatoren oder Netzmittel, wie z. B. Alkyl-diglykolethersulfat-Na-Salze in geringen Mengen (bis zu 10 %) hinzugesetzt werden, ohne daß sich die Eigenschaften der Formulierungen wesentlich verändern. Der Anteil an Dispergiermittel aus der Reihe der Kresol-Formaldehyd-Kondensationsprodukte mit einer aromatischen Sulfonsäure beträgt bis zu 10 Gew.-%, vorzugsweise bis zu 5 Gew.-%.

Geeignet sind alle mit Wasser nicht mischbaren, für den Einsatz in der Landwirtschaft unbedenklichen Lösungsmittel, vorzugsweise aus den Gruppen der Aromaten, Ketone und Pyrrolidone.

Als aromatische Lösungsmittel eignen sich beispielsweise Toluol, Xylole, höhersiedende Aromatenfraktionen, Methylnaphthaline sowie Lösungsmittel aus der ®Solvesso-Reihe (Esso), als Ketone insbesondere Cyclohexanon sowie Acetophenon, weiterhin Pyrrolidone, wie N-Methylpyrrolidon (NMP), oder Gemische der genannten Lösungsmittel.

Die erfindungsgemäßen Pflanzenschutzmittel-Kombinationen enthalten einen Gesamtwirkstoffanteil von 3 - 50 Gew.-%, ferner 5 - 60 Gew.-%, bevorzugt 10 - 50 Gew.-% Lösungsmittel oder Lösungsmittelgemisch; 10 - 40 Gew.-%, bevorzugt 15 - 25 Gew.-% Emulgatoren und/oder Netzmittel, 0,1 - 15 Gew.-%, bevorzugt 1 - 10 Gew.-% Cosolvent und/oder Frostschutzmittel sowie 5 - 70 Gew.-%, bevorzugt 15 - 50 Gew.-% Wasser.

Das Gewichtverhältnis wäßrige zu organische Phase kann in den Formulierungen zwischen 5:1 und 1:5 variieren.

Die Erfindung betrifft ferner ein Verfahren zur Herstellung der erfindungsgemäßen Mittel. Hierzu werden die obengenannten Komponenten in den erforderlichen Mengen vorzugsweise bei Temperaturen zwischen 10 und 60°C, zweckmäßigerweise bei Raumtemperatur oder leicht darüber, in eine Zone hoher Turbulenz: gebracht, bis sich die gewünschte homogene stabile transparente Mikroemulsion gebildet hat.

Im allgemeinen wird zur praktischen Durchführung des Verfahrens beispielsweise zunächst aus der Dispergator-Lösung, dem Netrmittel und gegebenenfalls zusätslichem Wasser die wäßrige Phase hergestellt. Vorzugsweise wird danach der zu emulgierende in Wasser unlösliche Wirkstoff in dem organischen Lösungsmittel gelöst und mit den Emulgator-Anteilen versetzt. Die so entstandene organische Phase wird dann beim Mischen mit Wasser Scherkräften ausgesetzt, wie sie beispielsweise beim Rühren, in statischen Mischern, in Kolloidmühlen und/oder bei Behandlung mit einem Disolver auftreten. Die anfangs milchige Makroemulison geht nach einiger Zeit in eine transparente Mikroemulsion über.

Das Dispergieren kann gegebenenfalls auch durch einen Schüttelvorgang oder in einem statischen Mischer erfolgen und wird zweckmäßigerweise so lange fortgesetzt, bis die Zubereitung in sich homogen ist. Der Dispergiervorgang wird zweckmäßigerweise bei Raumtemperatur durchgeführt, kann aber auch in der Kälte oder bei erhöhten Temperaturen erfolgen.

Die so hergestellten Formulierungen sind als Mikroemulsionen stabil gegen chemischen Abbau der Wirkstoffe und gegen Phasentrennungen, auch bei vergleichsweise hohen Wirkstoffgehalten. Sie sind deshalb sehr gut lagerstabil und auch für die Lagerung unter klimatisch ungünstigen Bedingungen, insbesondere auch bei höheren Temperaturen von 30 bis 50 °C geeignet.

Vor der biologischen Anwendung der Formulierungen werden diese mit Wasser gemischt und ergeben anwendungstechnisch einwandfreie Spritzbrühen (Die gebrauchsfertige Verdünnung ist vorzugsweise 1:200 bis 1:400).

Die folgenden Beispiele sollen die vorliegende Erfindung näher erläutern, ohne daß diese darauf beschränkt wäre:

### Beispiel 1

4,3 Gew.-% Fenoxaprop-P-ethyl werden in 35,0 Gew.-% eines Aromatengemisches (Siedebereich 219 - 282 °C) unter Rühren bei 20 - 30 °C gelöst und danach mit 1,1 Gew.-% eines 1-Aryl-3-alkoxycarbonyl-5-alkyl-1,2,4-triazols versetzt. Dazu gibt man 16,6 Gew.-% Nonylphenol 10 EO und 8,0 Gew.-% eines (C₁₂-C₁₈)-Fettsäurepolyglykolesters 40 EO und 8,0 Gew.-% einer 70 %igen butanolischen Lösung des Ca-Salzes der Dodecylbenzolsulfonsäure. In einem anderen Rührgefäß werden 16,0 Gew.-% Wasser mit 4,0 Gew.-% n-Butoxy-polyoxypropylen-polyoxyethylen-ether, 3,0 Gew.-% eines ethoxylierten Sojaöls und 4,0 Gew.-% Glycerin gerührt. Zu dieser Lösung setzt man unter weiterem Rühren die organische Phase zu und rührt bis zur Bildung einer niedrigviskosen, transparenten Mikroemulsion.

### Beispiel 2

8,5 Gew.-% Fenoxaprop-P-ethyl werden in 30,0 Gew.-% eines Aromatengemisches (Siedebereich 219 - 282 °C) unter Rühren bei 20 - 30 °C gelöst und danach mit 2,1 Gew.-% eines 1-Aryl-3-alkoxycarbonyl-5-alkyl-1,2,4-triazols (z.B. 1-(2,4-Dichlorphenyl)3-ethoxycarbonyl-5-trichlormethyl-1,2,4-triazol) versetzt. Dazu gibt man 20,4 Gew.-% Nonylphenol 10 EO und 6,0 Gew.-% eines (C₁₂-C₁₈)-Fettsäurepolyglykolesters 40 EO und 6,0 Gew.-% einer 70 %igen butanolischen Lösung des Ca-Salzes der Dodecylbenzolsulfonsäure. In einem anderen Rührgefäß werden 16,0 Gew.-% Wasser mit 4,0 Gew.-% n-Butoxy-polyoxypropylenpolyoxyethylen-ether, 3,0 Gew.-% eines ethoxylierten Sojaöls und 4,0 Gew.-% Glycerin gerührt. Zu dieser Lösung setzt man unter weiterem Rühren die organische Phase zu und rührt bis zur Bildung einer niedrigviskosen, transparenten Mikroemulsion.

### Beispiel 3

8,16 Gew.-% Fenoxaprop-P-ethyl werden in 35,75 Gew.-% eines Aromatengemisches (Siedebereich 219 - 282 °C) und 5,0 Gew.-% NMP unter Rühren bei 20 - 30 °C gelöst. Dazu gibt man 4,08 Gew.-% eines 1-Aryl-5-alkoxycarbonyl-5-alkyl-pyrazolin-3-carbonsäureesters (z.B. 1-(2,4-Dichlorphenyl)-5-ethoxycarbonyl-5-methyl-pyrazolin-3-carbonsäure-ethylester) sowie 12,01 Gew.-% Nonylphenol 10 EO und 6,0 Gew.-% eines (C₁₂-C₁₈)-Fettsäurepolyglykolesters 40 EO. Zu der klaren Lösung gibt man 12,0 Gew.-% einer 70 %igen butanolischen Lösung des Ca-Salzes der Dodecylbenzolsulfonsäure. In einem anderen Rührgefäß werden 13,0 Gew.-% Wasser mit 2,0 Gew.-% n-Butoxy-polyoxypropylen-polyoxyethylen-ether und 2,0 Gew.-% Glycerin gerührt. Zu dieser Lösung setzt man unter weiterem Rühren die organische Phase zu und rührt bis zur Bildung einer niedrigviskosen, transparenten Mikroemulsion.

### Beispiel 4

6,13 Gew.-% Fenoxaprop-P-ethyl werden in 43,63 Gew.-% eines Aromatengemisches (Siedebereich 219 - 282 °C) und 3,0 Gew.-% NMP unter Rühren bei 20 - 30 °C gelöst. Dazu gibt man 3,1 Gew.-% eines 1-Aryl-5-alkoxycarbonyl-5-alkyl-pyrazolin-3-carbonsäureesters (z.B. 1-(2,4-Dichlorphenyl)-5-ethoxycarbonyl-5-methyl-pyrazolin-3-carbonsäure-ethylester) sowie 9,14 Gew.-% Nonylphenol 10 EO und 7,0 Gew.-% eines (C₁₂-C₁₈)-Fettsäurepolyglykolesters 40 EO. Zu der klaren Lösung gibt man 11,0 Gew.-% einer 70 %igen butanolischen Lösung des Ca-Salzes der Dodecylbenzolsulfonsäure. In einem anderen Rührgefäß werden 13,0 Gew.-% Wasser mit 2,0 Gew.-% eines n-Butoxy-polyoxypropylen-polyoxyethylen-ethers und 2,0 Gew.-% Glycerin gerührt. Zu dieser Lösung setzt man unter weiterem Rühren die organische Phase zu und rührt bis zur Bildung einer niedrigviskosen, transparenten Mikroemulsion.

### Beispiel 5

6,13 Gew.-% Fenoxaprop-P-ethyl werden in 44,63 Gew.-% eines Aromatengemisches (Siedebereich 219 - 282 °C) und 3,0 Gew.-% NMP unter Rühren bei 20 - 30°C gelöst. Dazu gibt man 3,1 Gew.-% eines 1-Aryl-5-alkoxycarbonyl-5-alkyl-pyrazolin-3-carbonsäureesters (z.B. 1-(2,4-Dichlorphenyl)-5-ethoxycarbonyl-5-methyl-pyrazolin-3-carbonsäure-ethylester) sowie 9,14 Gew.-% Nonylphenol 10 EO und 7,0 Gew.-% eines (C₁₂-C₁₈)-Fettsäurepolyglykolesters 40 EO. Zu der klaren Lösung gibt man 8,0 Gew.-% einer 70 %igen butanolischen Lösung des Ca-Salzes der Dodecylbenzolsulfonsäure. In einem anderen Rührgefäß werden 14,0 Gew.-% Wasser mit 2,0 Gew.-% eines n-Butoxy-polyoxypropylen-polyoxyethylen-ethers und 3,0 Gew.-% Glycerin gerührt. Zu dieser Lösung setzt man unter weiterem Rühren die organische Phase zu und rührt bis zur Bildung einer niedrigviskosen, transparenten Mikroemulsion.

## Patentansprüche (Patentansprüche für folgende(n) Vertragsstaat(en): AT, BE, CH, DE, DK, FR, GB, GR, IT, LI, NL, PT)

1. Mikroemulsion, enthaltend:
- mindestens einen herbiziden Wirkstoff aus der Klasse der Phenoxyphenoxy- und der Heteroaryloxyphenoxy-carbonsäure-Derivate,
- mindestens einen Dispergator aus der Klasse der Fettalkoholpolyoxypropylen-polyoxyethylen-ether und der Polyoxyethylen-polyoxypropylen-blockcopolymeren,
- mindestens einen Emulgator oder ein Netzmittel aus der Gruppe dodecylbenzolsulfonsaures Calcium, Fettsäurepolyglykolester, der ethoxylierten Nonylphenole und der Alkanolpolyglykolether,
- mindestens ein organisches Lösungsmittel vorzugsweise aus der Gruppe der Aromaten und Ketone und
- Wasser.

2. Mikroemulsion gemäß Anspruch 1 zusätzlich enthaltend mindestens eine Verbindung aus der Gruppe der gegebenenfalls substituierten 1-Aryl-3-alkoxycarbonyl-5-alkyl-1,2,4-triazole, der substituierten 1-Aryl-5-alkoxycarbonyl-5-alkyl-pyrazolin-3-carbonsäureester und der 5-substituierten 8-Chinolinoxyessigsäureester.

3. Mikroemulsion gemäß Anspruch 1 oder 2, zusätslich enthaltend mindestens eine Verbindung aus der Klasse der substituierten Aryloxyalkansäuren und/oder der halogenierten Hydroxybenzonitrile.

4. Mikroemulsion gemäß einen der Ansprüche 1 bis 3, zusätzlich enthaltend einen oder mehrere Carbonsäure- und/oder Phosphorsäureester von aliphatischen Mono-, Di- oder Polyalkoholen als stabilisierendes Agens.

5. Mikroemulsion gemäß einem der Ansprüche 1 bis 4, zusätzlich enthaltend mindestens ein Cosolvent und/oder Frostschutzmittel ausgewählt aus der Gruppe bestehend aus Polyolen, Zuckern und Harnstoff.

6. Mikroemulsion gemäß einem der Ansprüche 1 bis 5, zusätzlich enhaltend mindestens ein Dispergiermittel aus der Reihe der Kresol-Formaldehyd-Kondensationsprodukte mit einer aromatischen Sulfonsäure.

7. Mikroemulsion gemäß einem der Ansprüche 1 bis 6, enthaltend 3 - 50 Gew.-% Wirkstoff, 5 - 60 Gew.-% Lösungsmittel oder Lösungsmittelgemisch, 10 - 40 Gew.-% Emulgator und/oder Netzmittel, 0,1 bis 15 Gew.-% Cosolvent und/oder Frostschutzmittel sowie 5 - 70 Gew.-% Wasser.

8. Mikroemulsion gemäß einem der Ansprüche 1 bis 7, enthaltend Fenoxaprop-ethyl in der D-Form oder als Stereoisomerengemisch.

9. Mikroemulsion gemäß einem der Ansprüche 1 bis 8, enthaltend mindestens eine Verbindung aus der Reihe
1-(2,4-Dichlorphenyl)-3-ethoxycarbonyl-5-trichlormethyl-1,2,4-triazol,
1-(2,4-Dichlorphenyl)-5-ethoxycarbonyl-5-methyl-pyrazolin-3-carbonsäure-ethylester und
(5-Chlor-8-chinolinoxy)-essigsäureester.

10. Verfahren zur Herstellung einer Mikroemulsion gemäß einem der Ansprüche 1 bis 9, dadurch gekennzeichnet, daß man die Komponenten in den erforderlichen Mengen in eine Zone hoher Turbulenz bringt.

11. Verwendung einer Mikroemulsion gemäß einem der Ansprüche 1 bis 10 zur Herstellung wäßriger Zubereitungen von pestiziden Wirkstoffen.

## Patentansprüche (Patentansprüche für folgende(n) Vertragsstaat(en): ES)

1. Verfahren zur Herstellung einer Mikroemulsion, enthaltend:
- mindestens einen herbiziden Wirkstoff aus der Klasse der Phenoxyphenoxy- und der Heteroaryloxyphenoxy-carbonsäure-Derivate,
- mindestens einen Dispergator aus der Klasse der Fettalkoholpolyoxypropylen-polyoxyethylen-ether und der Polyoxyethylen-polyoxypropylen-blockcopolymeren,
- mindestens einen Emulgator oder ein Netzmittel aus der Gruppe dodecylbenzolsulfonsaures Calcium, Fettsäurepolyglykolester, der ethoxylierten Nonylphenole und der Alkanolpolyglykolether,
- mindestens ein organisches Lösungsmittel vorzugsweise aus der Gruppe der Aromaten und Ketone und
- Wasser.
dadurch gekennzeichnet, daß man die Komponenten in den erforderlichen Mengen in eine Zone hoher Turbulenz bringt.

2. Verfahren gemäß Anspruch 1 zur Herstellung einer Mikroemulsion, zusätzlich enthaltend mindestens eine Verbindung aus der Gruppe der gegebenenfalls substituierten 1-Aryl-3-alkoxycarbonyl-5-alkyl-1,2,4-triazole, der substituierten 1-Aryl-5-alkoxycarbonyl-5-alkyl-pyrazolin-3-carbonsäureester und der 5-substituierten 8-Chinolinoxyessigsäureester.

3. Verfahren gemäß Anspruch 1 oder 2 zur Herstellung einer Mikroemulsion, zusätzlich enthaltend mindestens eine Verbindung aus der Klasse der substituierten Aryloxyalkansäuren und/oder der halogenierten Hydroxybenzonitrile.

4. Verfahren gemäß einen der Ansprüche 1 bis 3 zur Herstellung einer Mikroemulsion, zusätzlich enthaltend einen oder mehrere Carbonsäure- und/oder Phosphorsäureester von aliphatischen Mono-, Di- oder Polyalkoholen als stabilisierendes Agens.

5. Verfahren gemäß einem der Ansprüche 1 bis 4 zur Herstellung einer Mikroemulsion, zusätzlich enthaltend mindestens ein Cosolvent und/oder Frostschutzmittel ausgewählt aus der Gruppe aus Polyolen, Zuckern und Harnstoff.

6. Verfahren gemäß einem der Ansprüche 1 bis 5 zur Herstellung einer Mikroemulsion, enthaltend mindestens ein Dispergiermittel aus der Reihe der Kresol-Formaldehyd-Kondensationsprodukte mit einer aromatischen Sulfonsäure.

7. Verfahren gemäß einem der Ansprüche 1 bis 6 zur Herstellung einer Mikroemulsion, enthaltend 3 - 50 Gew.-% Wirkstoff, 5 - 60 Gew.-% Lösungsmittel oder Lösungsmittelgemisch, 10 - 40 Gew.-% Emulgator und/oder Netzmittel, 0,1 bis 15 Gew.-% Cosolvent und/oder Frostschutzmittel sowie 5 - 70 Gew.-% Wasser.

8. Verfahren gemäß einem der Ansprüche 1 bis 7 zur Herstellung einer Mikroemulsion, enthaltend Fenoxaprop-ethyl in der D-Form oder als Stereoisomerengemisch.

9. Verfahren gemäß einem der Ansprüche 1 bis 8 zu Herstellung einer Mikroemulsion, enthaltend mindestens eine Verbindung aus der Reihe
1-(2,4-Dichlorphenyl)-3-ethoxycarbonyl-5-trichlormethyl-1,2,4-triazol,
1-(2,4-Dichlorphenyl)-5-ethoxycarbonyl-5-methyl-pyrazolin-3-carbonsäure-ethylester und
(5-Chlor-8-chinolinoxy)-essigsäureester.

10. Verwendung einer Mikroemulsion gemäß einem der Ansprüche 1 bis 9 zur Herstellung wäßriger Zubereitungen von pestiziden Wirkstoffen.

## Claims (Claims for the following Contracting State(s): AT, BE, CH, DE, DK, FR, GB, GR, IT, LI, NL, PT)

1. A microemulsion comprising:
- at least one herbicidal active substance from the class of the phenoxyphenoxy- and heteroaryloxy-phenoxycarboxylic acid derivatives,
- at least one dispersant from the class of the fatty alcohol polyoxypropylene-polyoxyethylene ethers and of the polyoxyethylene-polyoxypropylene block copolymers,
- at least one emulsifier or one wetting agent from the group comprising calcium dodecylbenzenesulfonate, fatty acid polyglycol esters of the ethoxylated nonylphenols and of the alkanol polyglycol ethers,
- at least one organic solvent preferably from the group of the aromatics and ketones, and
- water.

2. A microemulsion as claimed in claim 1, additionally comprising at least one compound from the group of the optionally substituted 1-aryl-3-alkoxycarbonyl-5-alkyl-1,2,4-triazoles, the substituted 1-aryl-5-alkoxycarbonyl-5-alkylpyrazoline-3-carboxylates and the 5-substituted 8-quinolinoxy-acetates.

3. A microemulsion as claimed in claim 1 or 2, additionally comprising at least one compound from the class of the substituted aryloxyalkanoic acids and/or halogenated hydroxybenzonitriles.

4. A microemulsion as claimed in one of claims 1 to 3, additionally comprising one or more carboxylates and/or phosphates of aliphatic monoalcohols, dialcohols or polyalcohols as stabilizing agent.

5. A microemulsion as claimed in one of claims 1 to 4, additionally comprising at least one cosolvent and/or antifreeze selected from the group comprising polyols, sugars and urea.

6. A microemulsion as claimed in one of claims 1 to 5, additionally comprising at least one dispersant from the series of the cresol-formaldehyde condensation products with an aromatic sulfonic acid.

7. A microemulsion as claimed in one of claims 1 to 6, comprising 3 - 50 % by weight of active substance, 5 - 60 % by weight of solvent or solvent mixture, 10 - 40 % by weight of emulsifier and/or wetting agent, 0.1 - 15 % by weight of cosolvent and/or antifreeze, as well as 5 - 70 % by weight of water.

8. A microemulsion as claimed in one of claims 1 to 7, comprising fenoxaprop-ethyl in the D-form or as a stereoisomer mixture.

9. A microemulsion as claimed in one of claims 1 to 8, comprising at least one compound from the series
1-(2,4-dichlorophenyl)-3-ethoxycarbonyl-5-trichloromethyl-1,2,4-triazole,
1-(2,4-dichlorophenyl)-5-ethoxycarbonyl-5-methylpyrazoline-3-carboxylate and
(5-chloro-8-quinolinoxy) acetate.

10. A process for the preparation of a microemulsion as claimed in one of claims 1 to 9, which comprises bringing the required amounts of the components into a zone of high turbulence.

11. The use of a microemulsion as claimed in one of claims 1 to 10 for preparing aqueous preparations of pesticidal active substances.

## Claims (Claims for the following Contracting State(s): ES)

1. A process for the preparation of a microemulsion comprising:
- at least one herbicidal active substance from the class of the phenoxyphenoxy- and heteroaryloxy-phenoxycarboxylic acid derivatives,
- at least one dispersant from the class of the fatty alcohol polyoxypropylene-polyoxyethylene ethers and of the polyoxyethylene-polyoxypropylene block copolymers,
- at least one emulsifier or one wetting agent from the group comprising calcium dodecylbenzenesulfonate, fatty acid polyglycol esters of the ethoxylated nonylphenols and of the alkanol polyglycol ethers,
- at least one organic solvent preferably from the group of the aromatics and ketones, and
- water,
which comprises bringing the required amounts of the components into a zone of high turbulence.

2. The process as claimed in claim 1 for the preparation of a microemulsion, additionally comprising at least one compound from the group of the optionally substituted 1-aryl-3-alkoxycarbonyl-5-alkyl-1,2,4-triazoles, the substituted 1-aryl-5-alkoxycarbonyl-5-alkylpyrazoline-3-carboxylates and the 5-substituted 8-quinolinoxy-acetates.

3. The process as claimed in claim 1 or 2 for the preparation of a microemulsion, additionally comprising at least one compound from the class of the substituted aryloxyalkanoic acids and/or halogenated hydroxybenzonitriles.

4. The process as claimed in one of claims 1 to 3 for the preparation of a microemulsion, additionally comprising one or more carboxylates and/or phosphates of aliphatic monoalcohols, dialcohols or polyalcohols as stabilizing agent.

5. The process as claimed in one of claims 1 to 4 for the preparation of a microemulsion, additionally comprising at least one cosolvent and/or antifreeze selected from the group of polyols, sugars and urea.

6. The process as claimed in one of claims 1 to 5 for the preparation of a microemulsion, additionally comprising at least one dispersant from the series of the cresol-formaldehyde condensation products with an aromatic sulfonic acid.

7. The process as claimed in one of claims 1 to 6 for the preparation of a microemulsion, comprising 3 - 50 % by weight of active substance, 5 - 60 % by weight of solvent or solvent mixture, 10 - 40 % by weight of emulsifier and/or wetting agent, 0.1 - 15 % by weight of cosolvent and/or antifreeze, as well as 5 - 70 % by weight of water.

8. The process as claimed in one of claims 1 to 7 for the preparation of a microemulsion, comprising fenoxaprop-ethyl in the D-form or as a stereoisomer mixture.

9. The process as claimed in one of claims 1 to 8 for the preparation of a microemulsion, comprising at least one compound from the series 1-(2,4-dichlorophenyl)-3-ethoxycarbonyl-5-trichloromethyl-1,2,4- triazole, 1-(2,4-dichlorophenyl)-5-ethoxycarbonyl-5-methylpyrazoline-3-carboxylate and (5-chloro-8-quinolinoxy) acetate.

10. The use of a microemulsion as claimed in one of claims 1 to 9 for preparing aqueous preparations of pesticidal active substances.

## Revendications (Revendications pour l'(les) Etat(s) contractant(s) suivant(s): AT, BE, CH, DE, DK, FR, GB, GR, IT, LI, NL, PT)

1. Microémulsion contenant
- au moins un produit herbicide de la classe des dérivés d'acides phénoxyphénoxycarboxyliques et hétéroaryloxyphénoxycarboxyliques,
- au moins un agent dispersant de la classe des éthers d'alcools gras de polyoxypropylène-polyoxyéthylène et des copolymères à blocs polyoxyéthylène/polyoxypropylène,
- au moins un émulsionnant ou un agent mouillant du groupe constitué par le dodécylbenzènesulfonate de calcium, des esters polyglycoliques d'acides gras de nonylphénols éthoxylés et des éthers polyglycoliques d'alcanols,
- au moins un solvant organique, de préférence du groupe des solvants aromatiques et des cétones, et
- de l'eau.

2. Microémulsion selon la revendication 1, contenant en outre au moins un composé du groupe des 1-aryl-3-alcoxycarbonyl-5-alkyl-1,2,4-triazoles éventuellement substitués, des esters d'acides 1-aryl-5-alcoxycarbonyl-5-alkylpyrazoline-3-carboxyliques substitués et des esters d'acides 8-quinolyloxyacétiques substitués en position 5.

3. Microémulsion selon la revendication 1 ou 2, contenant en outre au moins un composé de la classe des acides aryloxyalcanoïques substitués et/ou des hydroxybenzonitriles halogénés.

4. Microémulsion selon l'une des revendications 1 à 3, contenant en outre un ou plusieurs esters d'acides carboxyliques et/ou d'acide phosphorique de mono-, di- ou polyalcools aliphatiques comme agents stabilisants.

5. Microémulsion selon l'une des revendications 1 à 4, contenant en outre au moins un co-solvant et/ou un produit antigel choisis dans le groupe constitué par les polyols, les sucres et l'urée.

6. Microémulsion selon l'une des revendications 1 à 5, contenant en outre au moins un agent dispersant de la série des produits de condensation de crésol-formaldéhyde avec un acide sulfonique aromatique.

7. Microémulsion selon l'une des revendications 1 à 6, contenant 3 à 50 % en masse de produit actif, 5 à 60 % en masse de solvant ou de mélange de solvants, 10 à 40 % en masse d'émulsionnant et/ou d'agent mouillant, 0,1 à 15 % en masse de co-solvant et/ou de produit antigel et 5 à 70 % en masse d'eau.

8. Microémulsion selon l'une des revendications 1 à 7, contenant du fénoxaprop-éthyle sous forme D ou sous forme de mélange d'isomères.

9. Microémulsion selon l'une des revendications 1 à 8, contenant au moins un composé de la série constituée par
le 1-(2,4-dichlorophényl)-3-éthoxycarbonyl-5-trichlorométhyl-1,2,4-triazole,
le 1-(2,4-dichlorophényl)-5-éthoxycarbonyl-5-méthylpyrazoline-3-carboxylate d'éthyle, et
les esters de l'acide (5-chloro-8-quinolyloxy)acétique.

10. Procédé de préparation d'une microémulsion selon l'une des revendications 1 à 9, caractérisé en ce que l'on amène les constituants, en les quantités nécessaires, dans une zone de haute turbulence.

11. Utilisation d'une microémulsion selon l'une des revendications 1 à 10 pour la fabrication de préparations aqueuses de produits pesticides.

## Revendications (Revendications pour l'(les) Etat(s) contractant(s) suivant(s): ES)

1. Procédé de préparation d'une microémulsion contenant
- au moins un produit herbicide de la classe des dérivés d'acides phénoxyphénoxycarboxyliques et hétéroaryloxyphénoxycarboxyliques,
- au moins un agent dispersant de la classe des éthers d'alcools gras de polyoxypropylène-polyoxyéthylène et des copolymères à blocs polyoxyéthylène/polyoxypropylène,
- au moins un émulsionnant ou un agent mouillant du groupe constitué par le dodécylbenzènesulfonate de calcium, des esters polyglycoliques d'acides gras de nonylphénols éthoxylés et des éthers polyglycoliques d'alcanols,
- au moins un solvant organique, de préférence du groupe des solvants aromatiques et des cétones, et
- de l'eau,
caractérisé en ce que l'on amène les constituants, en les quantités nécessaires, dans une zone de haute turbulence.

2. Procédé selon la revendication 1, pour la préparation d'une microémulsion contenant en outre au moins un composé du groupe dés 1-aryl-3-alcoxycarbonyl-5-alkyl-1,2,4-triazoles éventuellement substitués, des esters d'acides 1-aryl-5-alcoxycarbonyl-5-alkylpyrazoline-3-carboxyliques substitués et des esters d'acides 8-quinolyloxyacétiques substitués en position 5.

3. Procédé selon la revendication 1 ou 2, pour la préparation d'une microémulsion contenant en outre au moins un composé de la classe des acides aryloxyalcanoïques substitués et/ou des hydroxybenzonitriles halogénés.

4. Procédé selon l'une des revendications 1 à 3, pour la préparation d'une microémulsion contenant en outre un ou plusieurs esters d'acides carboxyliques et/ou d'acide phosphorique de mono-, di- ou polyalcools aliphatiques comme agents stabilisants.

5. Procédé selon l'une des revendications 1 à 4, pour la préparation d'une microémulsion contenant en outre au moins un co-solvant et/ou un produit antigel choisis dans le groupe constitué par les polyols, les sucres et l'urée.

6. Procédé selon l'une des revendications 1 à 5, pour la préparation d'une microémulsion contenant en outre au moins un agent dispersant de la série des produits de condensation de crésol-formaldéhyde avec un acide sulfonique aromatique.

7. Procédé selon l'une des revendications 1 à 6, pour la préparation d'une microémulsion contenant 3 à 50 % en masse de produit actif, 5 à 60 % en masse de solvant ou de mélange de solvants, 10 à 40 % en masse d'émulsionnant et/ou d'agent mouillant, 0,1 à 15 % en masse de co-solvant et/ou de produit antigel et 5 à 70 % en masse d'eau.

8. Procédé selon l'une des revendications 1 à 7, pour la préparation d'une microémulsion contenant du fénoxaprop-éthyle sous forme D ou sous forme de mélange d'isomères.

9. Procédé selon l'une des revendications 1 à 8, pour la préparation d'une microémulsion contenant au moins un composé de la série constituée par
le 1-(2,4-dichlorophényl)-3-éthoxycarbonyl-5-trichlorométhyl-1,2,4-triazole,
le 1-(2,4-dichlorophényl)-5-éthoxycarbonyl-5-méthylpyrazoline-3-carboxylate d'éthyle, et
les esters de l'acide (5-chloro-8-quinolyloxy)acétique.

10. Utilisation d'une microémulsion selon l'une des revendications 1 à 9 pour la fabrication de préparations aqueuses de produits pesticides.
